# EUROPEAN PATENT APPLICATION

(11) **EP 2 246 115 A1**
(43) Date of publication of application: **03.11.2010**
(21) Application number: 09006008.8
(22) Date of filing: 30.04.2009
(51) Int. Cl.: B02C 19/00

(54) **Machine conceived to shatter bottles**

(71) Applicant: ELLE.EFFE ITALIA S.r.l., 21047 Saronno-Varese (IT)
(72) Inventor: Maffioli, Stefano, 22074 Lomazzo (CO) (IT); Falleri, Moreno, 22074 Lomazzo (CO) (IT)

(57) **Abstract**

Machine (50) to shatter glass bottles, in particular, to crush them in little pieces, characterised by comprising a structural frame (51) set inside a casing (80), a shattering chamber (55' and 55") for a shattering unit (52), an underlying collecting element (54) to collect the shattered glass, and a slide (56), which can shift from a position outside the casing (80) to a position inside it (80), on which are set the above mentioned shattering chamber (55' and 55) and shattering elements (59), joined to an actuating element (64), and a reaction wall (61) against the shattering elements (59) that act on, at least, one bottle (62) inserted in the shattering chamber endowed with an opening of discharge (71) at the bottom, which is opened (60) by the shift of the shattering elements (59) above the collecting element (54).

## Description

The present invention refers to a machine conceived to shatter glass bottles, more precisely, to crush them into little pieces.

The problems and inconveniences that derive from glass bottles' disposal are well known. Such inconveniences also involve environmental pollution by scattered pieces of broken of glass, which are of varying sizes and represent a danger to people and animals. Moreover, the littering of glass bottles or broken parts of them in the environment represents a loss of an important economic resource; this could be, at least, partially recovered by recycling and reusing the glass.

In order to solve these problems, the collection of glass in general, and particularly of glass bottles, has been establishing itself more and more as a common procedure. This is done as a resource recovery practice as well as to diminish environmental pollution.

One of the first problems that arise is that bottles, or similar glass containers, are considerably encumbering. This makes their collection difficult, from private homes or blocks of flats, as well as from bars, restaurants and other public concerns.

This brings forth the need to find a solution to the mentioned problems of collecting glass in narrow spaces.

Some machines or systems to shatter glass bottles or similar containers have already been put forward, but they do not fit the requirement of simplicity and they are generally very noisy.

Moreover, they are usually quite bulky and, when they are smaller, they do not succeed in shattering the glass quickly enough.

The main object of the present invention is, therefore, to give a solution to the above mentioned technical and environmental problems, realising a machine or device that simplifies the collection and/or shattering of glass in narrow spaces.

Another object of the present invention is to make a machine that, while solving these problems, were easy to work.

A further object is to offer a machine or device at a reasonable price, thus affordable to a great number of users and, above all, that takes up an extremely limited space.

These objects, according to the present invention, are attained by realising a machine to shatter glass bottles, more precisely, to crush them into little pieces, as claimed in claim 1.

Further characteristics of the invention are set forth in the claims below.

The characteristics and advantages of a machine to shatter glass bottles or similar containers according to the invention will be defined in the following illustrative and non-limiting description, with reference to the schematic pictures enclosed:

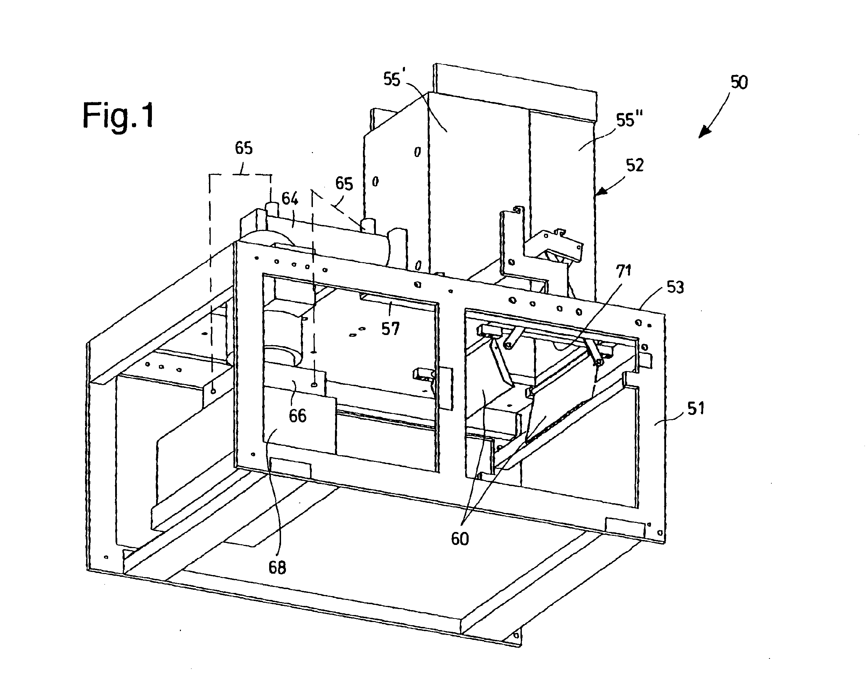

- Fig. 1 is a perspective view from the side and from below of a machine to shatter glass bottles or similar containers according to the invention, without its side shields. Its lower part is open and it is discharging the shattered glass.
- Fig. 2 is a view of the side elevation of the machine shown in Fig. 1.

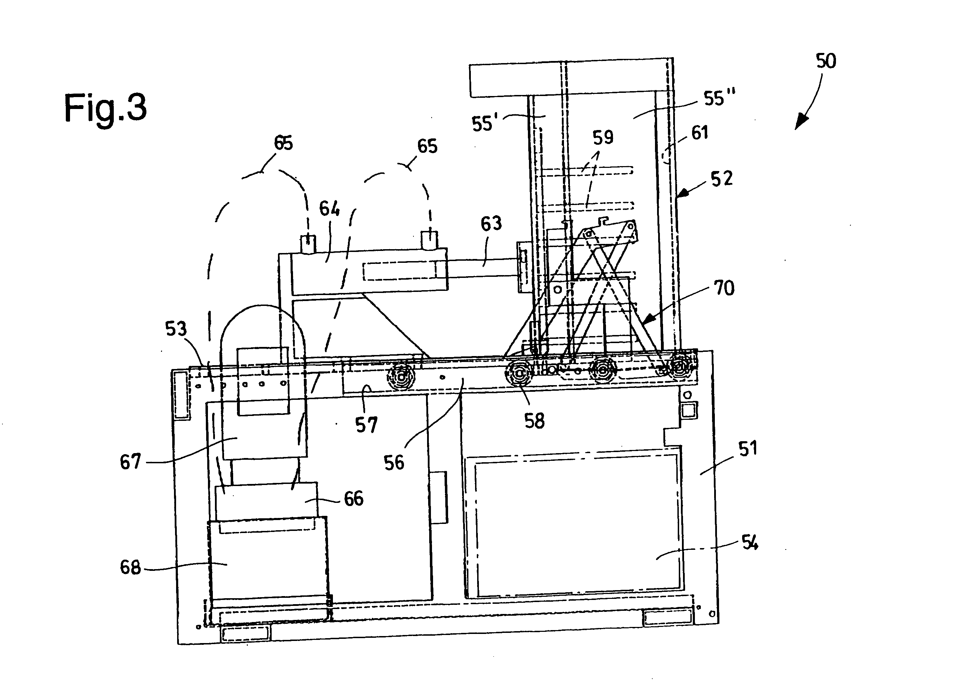

- Fig. 3 is a view of the side elevation similar to that shown in Fig. 2; the machine is shown in a resting position, ready to receive a bottle to be shattered.

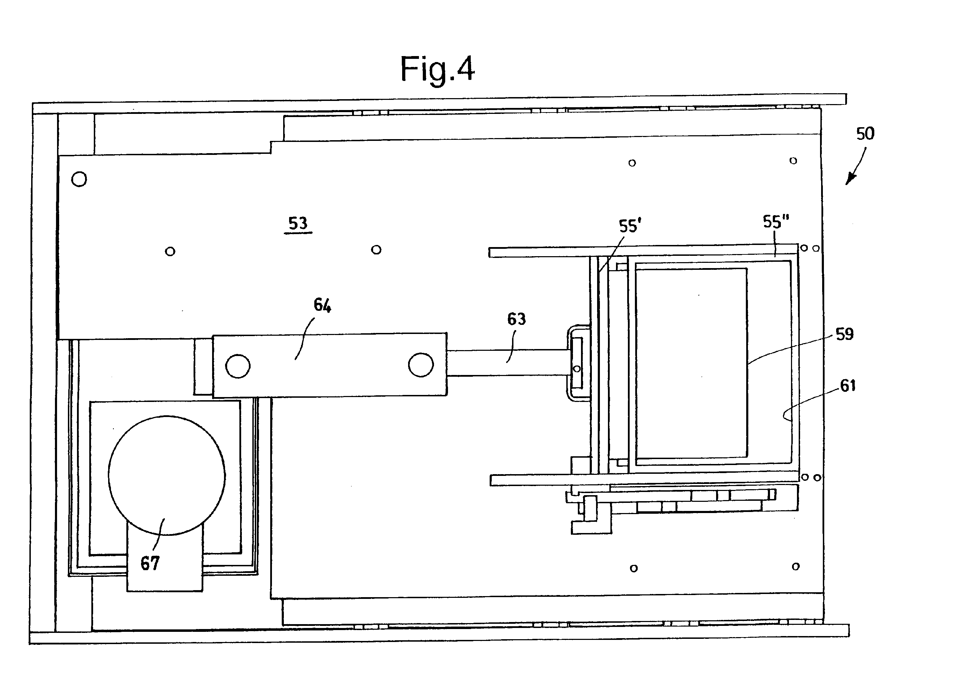

- Fig. 4 is a plan view of the machine shown in figure 3, seen from above.
- Fig. 5 is a perspective view of the machine closed within its casing.

With reference to the pictures, they show a machine to shatter glass bottles, more precisely, to crush them in little pieces, realised according to the invention (50 - the machine as a whole).

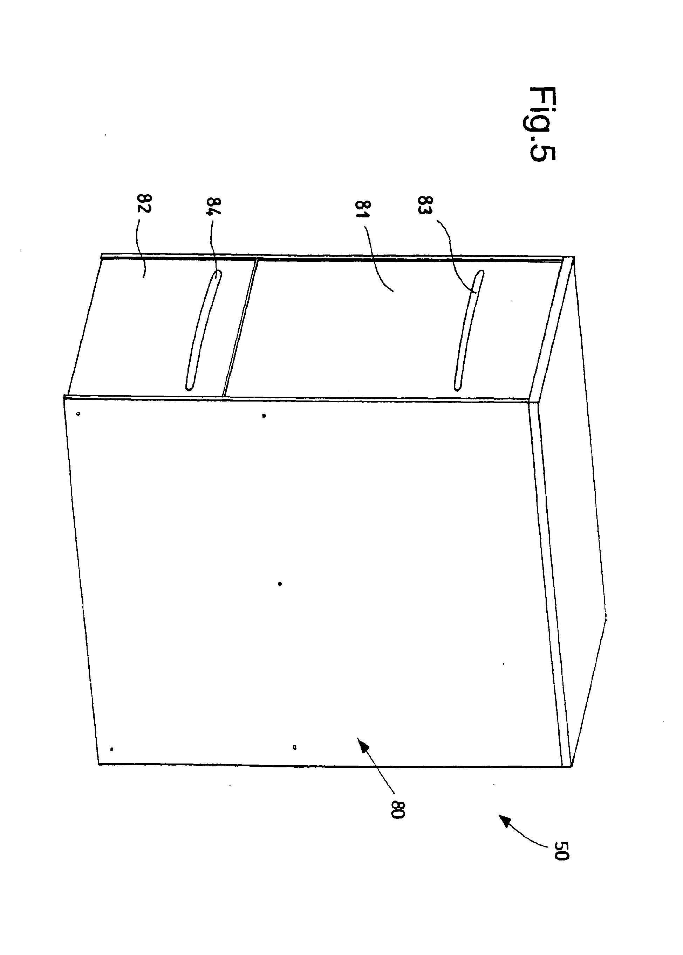

The machine (50) comprises a bearing frame (51 - shown in its general structure only, without its side shields) which allows a shattering mechanism (52) to be set on a higher plane (53), over an underlying collecting element (54) for the collection of the shattered glass. The whole, as shown on Fig. 5, is contained in a casing (80), endowed with a pair of drawers (81 and 82) that are opened by pulling their handles (83 and 84).

The shattering mechanism (52) comprises a box-like case, realised in two parts (55' and 55"), as shattering chamber; one of them (55') is a sliding part that fits in the other (55"). The first part (55') is joined to an actuator such as a hydraulic ram (64), which is, in turn, joined to the higher plane (53) of the frame (51). The hydraulic ram (64) has shattering elements attached to a rod (63). In this instance, these elements are represented by a couple of shattering blades (59) that shift to and from the reaction wall (61) of the fixed part (55") of the box-like case or shattering chamber.

The whole is set on a slide (56), made of profiles or side guides (57) which slides on ball or roller bearings (58); these are joined to the bearing frame (51) and, nevertheless, free to rotate.

The slide (56) can shift from its position inside the casing (80), as shown in Fig.s 5 and 2, to a position outside the casing by opening the drawer (81) by means of pulling its handle (83). This last position is not shown.

As mentioned, the rod (63), that is, the first part of the shattering chamber (55'), bears the shattering elements (59) comprising, in this instance, at least a pair of shattering blades that can hit the inner wall (61) of the fixed part (55") of the box-like case. The interaction between the two blades (59) and the inner wall (61) brings about the shattering of the bottle (drawn with a broken line - 62), so that it is crushed in little pieces.

The hydraulic ram (64) is connected by pipes (schematised - 65) to a pump (66) which is worked by an electric engine (67). The pump (66) is in its turn connected to an oil tank (68).

In this instance, six shattering blades (59) are shown, but the number may vary.

The bottle (62) is placed on a flat composed of a pair of shutters (60) which constitute the bottom of the box-like case.

These shutters (60) are set by an opening (71) at the bottom. They are shut over this opening (71) as the shattering elements (59) move forth; then, once the bottle is crushed, they open, as the shattering elements (59) and the first part (55') of the shattering chamber move back, ready to receive another bottle.

Their opening operation is carried out by an articulate system of levers (70), which is engaged in a point of the shattering elements' way back, and then released when they reach their terminal position.

The box-like case, including the two parts (55' and 55") and the shutters (60), constitutes a shattering chamber in which a bottle (62) to be shattered can be inserted by pulling the drawer (81). The whole of the mechanism is contained inside the casing (80), so that the shattering operation is soundproof.

Moreover, the hydraulic ram (64) as actuator of the shattering blades (59) guarantees a powerful and sustained action on the bottle (62), which is crushed in many little pieces, making it easy to dispose of the glass and minimizing the space occupied by the material to be recovered.

The drawer (82), with its handle (84), facilitates the extraction of the collecting element (54), for the disposal of the shattered glass contained in it.

The working of such a machine according to the present invention is simple; its understanding is made easier, however, by the pictures enclosed.

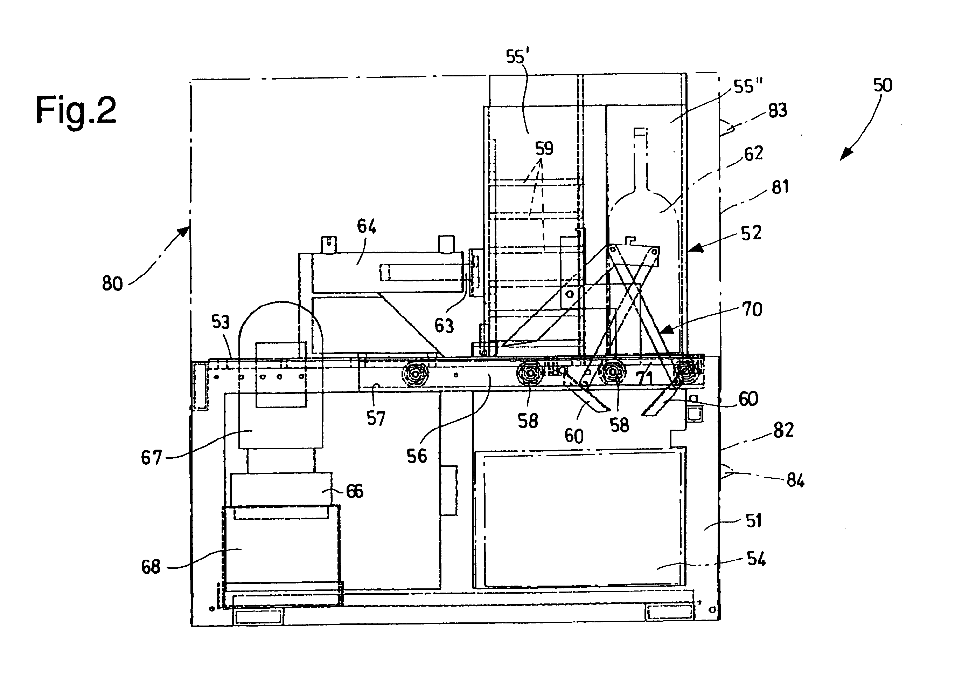

In its starting position, the machine is shown, as in Fig. 2, with the shutters (60) closed, containing the bottle (62) that has been inserted following the procedure of pulling out the drawer (81) and inserting it in the shattering chamber (55' and 55").

From this position in which the first part (55'), separated from the second part (55"), receives the bottle (62), the drawer (81) is closed again. The action of the hydraulic ram (64) joined to the shattering blades (59) also moves the first part (55'), which is joined to them as well, from an extracted position, in which it separated from the second part (55"), to an inserted position.

Such a shift (56) makes the shattering blades (59) crush the bottle (62) and hit the inner wall (61) of the fixed part (55") of the box-like case.

This interaction between the blades (59) and the inner wall (61) brings about the shattering of the bottle (62) in such a way that it is crushed in little pieces.

As mentioned, the work carried out by the hydraulic ram (64) with the shattering blades (59) guarantees a powerful and sustained action on the bottle, which is crushed in many little pieces.

When the rod (63) of the ram (64) moves back, the shattered glass falls down into the underlying collecting element (54) thanks to the articulated system of levers (70) that opens the shutters in order to clear the opening (71).

The space occupied by the glass is definitely small, and the whole of the machine is very little bulky. Consequently, it can be used in a limited space, such as the inside of bars, restaurants, or other public concerns.

At this point the machine is ready for the next cycle of bottle shattering by merely activating the ram (64).

It is possible to repeat this cycle until the collecting element (54) has collected the broken pieces of very many bottles.

The disposal of the remains of the bottles, which are very little bulky, is done by simply extracting the collecting element. It is then ready to collect the remains of more shattered bottles.

It is so plain that the machine to shatter glass bottles, more precisely, to crush them into little pieces, according to the present invention, attains the objects previously defined.

The machine to shatter glass bottles, more precisely, to crush them into little pieces, according to the present invention and so conceived, is susceptible of many variations and modifications, being them all comprised in the same inventive concept.

Moreover, the materials used, the components and their sizes, may vary in practice according to the technical demands.

## Claims

1. Machine (50) to shatter glass bottles, in particular, to crush them in little pieces, **characterized by** comprising a structural frame (51) set inside a casing (80), a shattering chamber (55' and 55") for a shattering unit (52), an underlying collecting element (54) to collect the shattered glass, and a slide (56), which can shift from a position outside the casing (80) to a position inside it (80), on which are set the above mentioned shattering chamber (55' and 55) and shattering elements (59), joined to an actuating element (64), and a reaction wall (61) against the shattering elements (59) that act on, at least, one bottle (62) inserted in the shattering chamber endowed with an opening of discharge (71) at the bottom, which is opened (60) by the shift of the shattering elements (59) above the collecting element (54).

2. Machine, as claimed in the preceding claim, **characterized in that** the mentioned actuating element (64), that brings about the shift of the mentioned shattering elements (59) and, at least, one part (55') of the mentioned shattering chamber (55' and 55"), is an hydraulic ram (64).

3. Machine, as claimed in the preceding claim, **characterized in that** the mentioned hydraulic ram (64) is connected by pipes (65) to a pump (66) which is, in its turn, connected to an oil tank (68).

4. Machine, as claimed in claim 1, **characterized in that** the mentioned opening of discharge (71), opened by the shift of the slide (56), over the collecting element (54), has hinged shutters (60) that shift from a closed to an open position.

5. Machine, as claimed in the preceding claim, **characterized in that** the mentioned hinged shutters (60) that shift from a closed to an open position, are worked by an articulated system of levers (70), which is engaged in a point of the way back of the mentioned slide (56) and then released when it reaches it terminal position.

6. Machine, as claimed in claim 1, **characterized in that** the mentioned shattering chamber (55' and 55") is constituted by a movable part (55') and a fixed part (55"), endowed with the above mentioned reaction wall (61) against the shattering elements (59).

7. Machine, as claimed in claim 1, **characterized in that** the mentioned slide (56) shifts from an extracted position to an inserted position inside a containing casing (80), in a drawer-like structure (81).

8. Machine, as claimed in claimed 1, **characterized in that** the mentioned collecting element (54) for the shattered glass shifts from an extracted position to an inserted position inside a containing case (80), in a drawer-like structure (82).
